# EUROPEAN PATENT SPECIFICATION

(11) **EP 1 032 497 B1**
(45) Date of publication and mention of the grant of the patent: **06.02.2002**
(21) Application number: 98953800.4
(22) Date of filing: 22.10.1998
(51) Int. Cl.: B41M 5/00, B41M 7/00, C08J 7/04, C09D 171/02, C09D 133/14

(54) **INKJET PRINTING MEDIUM COMPRISING CROSSLINKED PRINTING SURFACE**
VERNETZTE DRUCKENDE OBERFLÄCHE ENTHALTENDES TINTENSTRAHLDRUCKMEDIUM
DISPOSITIF D'IMPRESSION A JET D'ENCRE COMPRENANT UNE SURFACE D'IMPRESSION RETICULEE

(30) Priority: 28.10.1997 US 958907
(43) Date of publication of application: 06.09.2000
(73) Proprietor: Hewlett-Packard Company, A Delaware Corporation, Palo Alto, CA 94304 (US)
(72) Inventor: LI, Huawen, Delmont, PA 15626 (US); WANG, Alan, E., Gibsonia PA 15044 (US); HILL, Charles, T., New Brighton, PA 15066 (US); SWISHER, Robert, Pittsburgh, PA 15238 (US); DIEHL, David, A., Pittsburgh, PA 15237 (US)
(74) Representative: Sternagel, Fleischer, Godemeyer & Partner Patentanwälte
(86) International application number: US9822209
(87) International publication number: WO9921724

(56) References cited:
- WO-A-97/22476
- GB-A- 2 151 945
- PATENT ABSTRACTS OF JAPAN vol. 097, no. 011, 28 November 1997 & JP 09 174998 A (OJI PAPER CO LTD), 8 July 1997
- PATENT ABSTRACTS OF JAPAN vol. 096, no. 012, 26 December 1996 & JP 08 207423 A (NEW OJI PAPER CO LTD), 13 August 1996

## Description

Low wet smear resistance is a considerable problem that has arisen in inkjet printing. "Wet smear resistance" is the ability of inkjet printing to resist smearing when the inkjet printed and dried substrate is rubbed in the presence of water.

Printing Media which may be inkjet printed are described in WO 97/22 476.

Printing media which may be inkjet printed to provide images of improved wet smear resistance when used with wide variety of inkjet printing inks, printed media which provides images of improved wet smear resistance, and a method for producing such products have now been found.

Accordingly one embodiment of the invention is a process comprising: (a) providing a substrate having at least one surface; (b) forming an interior coating on the surface by applying to the surface an interior coating composition comprising: (1) first volatile aqueous liquid; and (2) water-solubilized or water-dispersed film-forming hydrophilic organic polymer which is substantially free from ethylenically unsaturated groups or which contains only few ethylenically unsaturated groups; (c) forming an exterior coating on the interior coating by applying to the interior coating an exterior coating composition comprising: (1) second volatile aqueous liquid; and (2) a film-forming member selected from the group consisting of: (A) water-solubilized film-forming hydrophilic organic polymer which contains numerous ethylenically unsaturated groups, (B) water-dispersed film-forming hydrophilic organic polymer which contains numerous ethylenically unsaturated groups, (C) water-solubilized film-forming hydrophilic organic oligomer which contains numerous ethylenically unsaturated groups, (D) water-dispersed film-forming hydrophilic organic oligomer which contains numerous ethylenically unsaturated groups, (E) water-solubilized film-forming hydrophilic organic monomer which contains numerous ethylenically unsaturated groups, (F) water-dispersed film-forming hydrophilic organic monomer which contains numerous ethylenically unsaturated groups, and (G) a mixture of two or more thereof; and (d) exposing the substrate, the interior coating, and the exterior coating to actinic light, ionizing radiation, or heat to provide the exterior coating with numerous crosslinks derived from ethylenically unsaturated groups present in the applied exterior coating composition; wherein: (e) the interior coating composition, the exterior coating composition, or each of the interior coating composition and the exterior coating composition further comprises discrete particles which are not film-forming and which have a number average particle size in the range of from 1 to 500 nanometers; (f) first volatile aqueous liquid is removed from the interior coating to produce an interior water-absorptive coating on the surface of the substrate, and (g) second volatile aqueous liquid is removed from the exterior coating to produce an exterior water-absorptive coating on the surface of the interior water-absorptive coating.

Yet another embodiment of the invention is an article comprising: (a) a substrate having at least one surface; (b) an interior water-absorptive coating on the surface wherein the interior water-absorptive coating comprises hydrophilic organic polymer which is substantially free from crosslinks derived from ethylenic unsaturation or which contains few crosslinks derived from ethylenic unsaturation; and (c) an exterior water-absorptive coating on the interior water-absorptive coating wherein the exterior water-absorptive coating comprises hydrophilic organic polymer which contains numerous crosslinks derived from ethylenic unsaturation; wherein: (d) the interior coating, the exterior coating , or each of the interior coating and the exterior coating further comprises discrete particles having a number average particle size in the range of from 1 to 500 nanometers.

Another embodiment is the above - mentioned article obtainable by certain Method steps as recited in claim 29.

The interior water-absorptive coating and the exterior water-absorptive coating both comprise hydrophilic organic polymer. The difference is that the hydrophilic organic polymer of the interior water-absorptive coating contains few, if any at all, crosslinks derived from ethylenic unsaturation, whereas the hydrophilic organic polymer of the second binder contains numerous crosslinks derived from ethylenic unsaturation. The crosslinks derived from ethylenic unsaturation may be provided by reacting linear polymer containing a plurality of ethylenically unsaturated groups along the polymer backbone, with monomer containing at least one ethylenically unsaturated group. Preferably, however, the crosslinks derived from ethylenic unsaturation are provided from polymer, oligomer, and/or monomer containing at least two ethylenically unsaturated groups.

The water absorbency of the interior water-absorptive coating is greater than that of the exterior water-absorptive coating. Crosslinks in water-absorptive coatings serve to reduce the water solubility of the organic polymer, but they also tend to reduce the water-absorbency of the coating. The crosslinks present in the exterior water-absorptive coating improve the wet smear resistance of the printing medium, but they are not so numerous as will seriously preclude absorption of water from applied inkjet printing ink or transfer of such water to the interior water-absorptive coating. The crosslinks in the exterior water-absorptive coating should also not be so numerous that the time required for drying ink at the surface of the coating is unduly extended. Crosslinks in the interior water-absorptive coating, if present at all, should not be so numerous as would unduly reduce the rate of transfer of water from the exterior water-absorptive coating to the interior water-absorptive coating.

Organic polymer which contains crosslinks may be a single polymer, but it is more often a mixture of two or more polymers, at least one of which contains crosslinks. It is permissible but not necessary that all polymers in a mixture of polymers contain crosslinks.

The number of crosslinks derived from ethylenic unsaturation is principally determined by the number of ethylenically unsaturated groups present in the organic polymer, organic oligomer, and/or organic monomer present in the coating composition which is applied to form the coating. In the interests of brevity, the coating composition used to form the interior water-absorptive coating will be referred to as the "interior coating composition" and the coating composition used to form the exterior water-absorptive coating will be referred to as the "exterior coating composition". Because crosslinking changes the structure of monomers, oligomers, and polymers, the hydrophilic organic polymer present in the interior water-absorptive coating and the hydrophilic organic polymer present in the exterior water-absorptive coating are best described in connection with the hydrophilic polymers, oligomers, and/or monomers present in the coating compositions used to form these coatings.

The number average particle size of the discrete particles is in the range of from 1 to 500 nanometers. Often the number average particle size is in the range of from 1 to 100 nanometers. Frequently the number average particle size is in the range of from 1 to 50 nanometers. Preferably the number average particle size is in the range of from 1 to 20 nanometers.

As used herein and in the claims number average particle size is determined by transmission electron microscopy.

The discrete particles may be inorganic filler particles, thermoset organic particles, or substantially nonfilm-forming thermoplastic organic polymer particles.

The discrete inorganic filler particles which may be present are often discrete particles of metal oxide. The metal oxide constituting the particles may be a simple metal oxide (i.e., the oxide of a single metal) or it may be a complex metal oxide (i.e., the oxide of two or more metals). The particles of metal oxide may be particles of a single metal oxide or they may be a mixture of different particles of different metal oxides.

Examples of suitable metal oxides include alumina, silica, and titania. Further examples of suitable metal oxides include cerium oxide, tin oxide, and zinc oxide. Other oxides may optionally be present in minor amount. Examples of such optional oxides include, but are not limited to, zirconia, hafnia, and yttria. Yet other metal oxides that may optionally be present are those which are ordinarily present as impurities such as for example, iron oxide. For purposes of the present specification and claims, silicon is considered to be a metal.

When the discrete particles are particles of alumina, most often the alumina is alumina monohydroxide. Particles of alumina monohydroxide, AlO(OH), and their preparation are known. The preparation and properties of alumina monohydroxide are described by B. E. Yoldas in The American Ceramic Society Bulletin, Vol. 54, No. 3, (March 1975), pages 289-290, in Journal of Applied Chemical Biotechnology, Vol. 23 (1973), pages 803-809, and in Journal of Materials Science, Vol. 10 (1975), pages 1856-1860. Briefly, aluminum isopropoxide or aluminum secondary-butoxide are hydrolyzed in an excess of water with vigorous agitation at from 75 C to 80°C to form a slurry of aluminum monohydroxide. The aluminum monohydroxide is then peptized at temperatures of at least 80°C with an acid to form a clear alumina monohydroxide sol which exhibits the Tyndall effect when illuminated with a narrow beam of light. Since the alumina monohydroxide of the sol is neither white nor colored, it is not a pigment and does not function as a pigment in the present invention. The acid employed is noncomplexing with aluminum, and it has sufficient strength to produce the required charge effect at low concentration. Nitric acid, hydrochloric acid, perchloric acid, acetic acid, chloroacetic acid, formic acid and methacrylic acid meet these requirements. The acid concentration is usually in the range of from 0.03 to 0.1 mole of acid per mole of aluminum alkoxide. Although it is desired not to be bound by any theory, it is believed that the alumina monohydroxide produced in this manner is pseudoboehmite. Pseudoboehmite is indeed the preferred alumina monohydroxide for use in the present invention. The alumina monohydroxide is not a pigment and does not function as a pigment in the present invention. In most instances the alumina monohydroxide is transparent and colorless.

Colloidal silica is also known. Its preparation and properties are described by R. K. Iler in The Chemistry of Silica, John Wiley & Sons, Inc., New York (1979) ISBN 0-471-02404-X, pages 312-337, and in United States Patents No. 2,601,235; 2,614,993; 2,614,994; 2,617,995; 2,631,134; 2,885,366; and 2,951,044, the disclosures of which are, in their entireties, incorporated herein by reference. Examples of commercially available colloidal silica include Ludox® HS, LS, SM, TM and CL-X colloidal silica (E. I. du Pont de Nemours & Company, Inc.) in which the counter ion is the sodium ion, and Ludox® AS colloidal silica (E. I. du Pont de Nemours & Company, Inc.) in which the counter ion is the ammonium ion. Another example is Ludox® AM colloidal silica (E. I. du Pont de Nemours & Company, Inc.) in which some of the silicon atoms have been replaced by aluminum atoms and the counter ion is the sodium ion.

Colloidal titania is also known. Its preparation and properties are described in United States Patent No. 4,275,118. Colloidal titania may also be prepared by reacting titanium isopropoxide [CAS 546-68-9] with water and tetramethyl ammonium hydroxide.

Discrete thermoset organic filler particles which may be present are particles of organic polymer crosslinked at least to the extent that they cannot be significantly softened or remelted by heat. The thermoset organic filler particles are not film-forming. Examples of such thermoset organic polymer particles include particles of thermoset melamine-aldehyde polymer, thermoset resorcinol-aldehyde polymer, thermoset phenol-resorcinol-aldehyde polymer, thermoset (meth)acrylate polymer, or thermoset styrene-divinylbenzene polymer.

The discrete thermoplastic organic filler particles which may be present are thermoplastic in that they may be softened and/or melted at elevated temperatures. Nevertheless they are not film-forming when used in accordance with this invention. Examples of suitable discrete thermoplastic organic polymer particles include polyethylene particles such as those contained in Poly Emulsion 316N30 sol (ChemCor Inc., Chester, NY), maleated polypropylene particles such as those contained in Poly Emulsion 43C30 sol (ChemCor Inc., Chester, NY), and polyacrylate, polymethacrylate, polystyrene, and/or fluoropolymer particles made by microemulsion processes.

When discrete particles which are not film-forming and which have a number average particle size in the range of from 1 to 500 nanometers are present in both the interior coating composition and the exterior coating composition, they may be the same or different. Similarly, the number average particle size of the discrete nonfilm-forming particles present in the interior coating composition may be the same or different from the number average particle size of the discrete nonfilm-forming particles present in the exterior coating composition.

The amount of the discrete nonfilm-forming particles in the interior water-absorptive coating, or in the exterior water-absorptive coating, as the case may be, may vary widely. Usually the discrete nonfilm-forming particles constitute from 1 to 80 percent by weight of the coating. In many cases the discrete nonfilm-forming particles constitute from 5 to 75 percent by weight of the coating. From 15 to 65 percent by weight is preferred.

Each of the coating compositions used to produce the printing media of the invention can independently be in the form of an aqueous solution in which case the volatile aqueous liquid is a volatile aqueous solvent for the film-forming organic polymer of the coating composition, or the coating composition can be in the form of an aqueous dispersion in which instance the volatile aqueous liquid is a volatile aqueous dispersion liquid for at least some of the film-forming organic polymer of the coating composition.

The volatile aqueous liquid is predominately water. Small amounts of low boiling volatile water-miscible organic liquids may be intentionally added for particular purposes. Examples of such low boiling volatile water-miscible organic liquids solvents include methanol [CAS 67-56-1], ethanol [CAS 64-17-5], 1-propanol, [CAS 71-23-8], 2-propanol [CAS 67-63-0], 2-butanol [CAS 78-92-2], 2-methyl-2-propanol [CAS 75-65-0], 2-propanone [CAS 67-64-1], and 2-butanone [CAS 78-93-3]. The listing of such liquids is by no means exhaustive.

Similarly, water-miscible organic liquids which themselves are of low, moderate, or even negligible volatility may be intentionally added for particular purposes, such as for example, retardation of evaporation. Examples of such organic liquids include 2-methyl-1-propanol [CAS 78-83-1], 1-butanol [CAS 71-36-3], 1,2-ethanediol [CAS 107-21-1], and 1,2,3-propanetriol [CAS 56-81-5]. The listing of such liquids is by no means exhaustive.

Those materials which, although not intentionally added for any particular purpose, are normally present as impurities in one or more of the components of the coating compositions of the invention and which become components of the volatile aqueous liquid, may be present at low concentrations.

In most instances water constitutes at least 60 percent by weight of the volatile aqueous liquid. Often water constitutes at least 80 percent by weight of the volatile aqueous liquid. Preferably water constitutes substantially all of the volatile aqueous liquid.

The amount of volatile aqueous liquid present in the coating composition may vary widely. The minimum amount is that which will produce a coating composition having a viscosity low enough to apply as a coating. The maximum amount is not governed by any theory, but by practical considerations such as the cost of the volatile aqueous liquid, the minimum desired thickness of the coating to be deposited, and the cost and time required to remove volatile aqueous liquid from the applied wet coating. Usually, however, the volatile aqueous liquid constitutes from 30 to 98 percent by weight of the coating composition. In many cases the volatile aqueous liquid constitutes from 50 to 96 percent by weight of the coating composition. Often the volatile aqueous liquid constitutes from 60 to 95 percent by weight of the coating composition. Preferably the volatile aqueous liquid constitutes from 80 to 95 percent by weight of the composition.

In general, the film-forming hydrophilic organic polymers, film-forming hydrophilic organic oligomers, and/or film-forming hydrophilic organic monomers present in the coating compositions as film-forming members are water-soluble or water-dispersible.

The water-soluble film-forming hydrophilic organic polymers which may be used in the present invention are numerous and widely varied. Examples include poly(ethylene oxide), poly(vinyl alcohol), poly(vinyl pyrrolidone), water-soluble cellulosic organic polymer, or a mixture of two or more thereof.

Water-soluble poly(ethylene oxide) is known. Such materials are ordinarily formed by polymerizing ethylene oxide [CAS 75-21-8], usually in the presence of a small amount of an initiator such as low molecular weight glycol or triol. Examples of such initiators include ethylene glycol [CAS 107-21-1], diethylene glycol [CAS 111-46-6], triethylene glycol [CAS 112-27-6], tetraethylene glycol [CAS 112-60-7], propylene glycol [CAS 57-55-6], trimethylene glycol [CAS 504-63-2], dipropylene glycol [CAS 110-98-5], glycerol [CAS 56-81-5], trimethylolpropane [CAS 77-99-6], and α,ω-diaminopoly(propylene glycol) [CAS 9046-10-0]. One or more other lower alkylene oxides such as propylene oxide [CAS 75-56-9] and trimethylene oxide [CAS 503-30-0] may also be employed as comonomer with the ethylene oxide, whether to form random polymers or block polymers, but they should be used only in those small amounts as will not render the resulting polymer both water-insoluble and nondispersible in water. As used herein and in the claims, the term "poly(ethylene oxide)" is intended to include the foregoing copolymers of ethylene oxide with small amounts of lower alkylene oxide, as well as homopolymers of ethylene oxide. The configuration of the poly(ethylene oxide) can be linear, branched, comb, or star-shaped. The preferred terminal groups of the poly(ethylene oxide) are hydroxyl groups, but terminal lower alkoxy groups such as methoxy groups may be present provided their types and numbers do not rendei the poly(ethylene oxide) polymer unsuitable for its purpose. In most cases the poly(ethylene oxide) is water-soluble. The preferred poly(ethylene oxide) is a water-soluble homopolymer of ethylene oxide produced using a small amount of ethylene glycol as an initiator.

The weight average molecular weight of the water-soluble poly(ethylene oxide) may vary widely. Usually it is in the range of from 100,000 to 3,000,000 although a weight average molecular weights somewhat below 100,000 or somewhat above 3,000,000 may be used. Often the weight average molecular weight of the water-soluble poly(ethylene oxide) is in the range of from 150,000 to 1,000,000. Frequently the weight average molecular weight of the water-soluble poly(ethylene oxide) is in the range of from 200,000 to 1,000,000. From 300,000 to 700,000 is preferred.

Water-soluble poly(vinyl alcohol) may be broadly classified as one of two types. The first type is fully hydrolyzed water-soluble poly(vinyl alcohol) in which less than 1.5 mole percent acetate groups are left on the molecule. The second type is partially hydrolyzed water-soluble poly(vinyl alcohol) in which from 1.5 to as much as 20 mole percent acetate groups are left on the molecule. The water-soluble organic polymer may comprise either type or a mixture of both. The weight average molecular weight of the water-soluble poly(vinyl alcohol) may vary considerably, but often it is in the range of from 10,000 to 800,000. In many cases the weight average molecular weight is in the range of from 50,000 to 700,000. From 100,000 to 500,000 is preferred.

Water-soluble poly(vinylpyrrolidone) is a known material and may be used. Usually, but not necessarily, the weight average molecular weight of the poly(vinylpyrrolidone) is in the range of from 1,000 to 3,000,000. Often the weight average molecular weight is in the range of from 5,000 to 1,000,000. From 5,000 to 500,000 is preferred.

There are many widely varying types of water-soluble cellulosic organic polymers which may be employed in the present invention. Of these, the water-soluble cellulose ethers are preferred water-soluble cellulosic organic polymers. Many of the water-soluble cellulose ethers are also excellent water retention agents. Examples of the water-soluble cellulose ethers include water-soluble methylcellulose [CAS 9004-67-5], water-soluble carboxymethylcellulose, water-soluble sodium carboxymethylcellulose [CAS 9004-32-4], water-soluble ethylmethylcellulose, water-soluble hydroxyethylmethylcellulose [CAS 9032-42-2], water-soluble hydroxypropylmethylcellulose [CAS 9004-65-3], water-soluble hydroxyethylcellulose [CAS 9004-62-0], water-soluble ethylhydroxyethylcellulose, water-soluble sodium carboxymethylhydroxyethylcellulose, water-soluble hydroxypropylcellulose [CAS 9004-64-2], water-soluble hydroxybutylcellulose [CAS 37208-08-5], water-soluble hydroxybutylmethylcellulose [CAS 9041-56-9] and water-soluble cellulose sulfate sodium salt [CAS 9005-22-5]. Water-soluble hydroxypropylcellulose is preferred.

Water-soluble hydroxypropylcellulose is a known material and is available commercially in several different weight average molecular weights. The weight average molecular weight of the water-soluble hydroxypropylcellulose used in the present invention can vary widely, but usually it is in the range of from 100,000 to 1,000,000. Often the weight average molecular weight is in the range of from 100,000 to 500,000. From 200,000 to 400,000 is preferred. Two or more water-soluble hydroxypropylcelluloses having different weight average molecular weights may be admixed to obtain a water-soluble hydroxypropyl cellulose having a differing weight average molecular weight.

Similarly, there are many widely varying kinds of other water-soluble polymers which may be employed in the present invention. Examples include water-soluble poly(vinylpyridine), water-soluble poly(ethylenimine), water-soluble ethoxylated poly(ethylenimine), water-soluble poly(ethylenimine)-epichlorohydrin, water-soluble polyacrylate, water-soluble sodium polyacrylate, water-soluble poly(acrylamide), water-soluble carboxy modified poly(vinyl alcohol), water-soluble poly(2-acrylamido-2-methylpropane sulfonic acid), water-soluble poly(styrene sulfonate), water-soluble vinyl methyl ether/maleic acid copolymer, water-soluble styrene-maleic anhydride copolymer, water-soluble ethylene-maleic anhydride copolymer, water-soluble acrylamide/acrylic acid copolymer, water-soluble poly(diethylene triamine-co-adipic acid), water-soluble poly[(dimethylamino)ethyl methacrylate hydrochloride], water-soluble quaternized poly(imidazoline), water-soluble poly(N,N-dimethyl-3,5-dimethylene piperidinium chloride), water-soluble poly(vinylpyridinium halide), water-soluble starch, water-soluble oxidized starch, water-soluble casein, water-soluble gelatin, water-soluble sodium alginate, water-soluble carrageenan, water-soluble dextran, water-soluble gum arabic, water-soluble pectin, water-soluble albumin, and water-soluble agar-agar.

Still other kinds of other water-soluble polymers which may be employed in the present invention include the water-soluble anionic polyacrylates and the water-soluble cationic polyacrylates. Water-soluble anionic polyacrylates are themselves well known. Usually, but not necessarily, they are copolymers of one or more (meth)acrylic esters and enough (meth)acrylic acid and/or (meth)acrylic acid salt to provide sufficient carboxylate anions to render the polymer water-soluble. Similarly, water-soluble cationic polyacrylates are themselves well known. Usually, but not necessarily, they are copolymers of one or more (meth)acrylic esters and enough amino-functional ester of (meth)acrylic acid to provide sufficient onium cations to render the acrylic polymer water-soluble. The onium may be primary ammonium, secondary ammonium, tertiary ammonium, quaternary ammonium, phosphonium, or sulfonium. Secondary ammonium, tertiary ammonium, or quaternary ammonium is preferred. Quaternary ammonium is especially preferred. Usually the water-soluble cationic polyacrylate is a primary, secondary, tertiary, or quaternary ammonium salt, or it is a quaternary ammonium hydroxide.

Water-dispersible film-forming polymers such as water-dispersible poly(ethylene-co-acrylic acid)or water-dispersible cationic acrylic polymer may be used.

The water-soluble or water-dispersible film-forming hydrophilic organic polymers, oligomers, and monomers which contain numerous ethylenically unsaturated groups may be widely varied. In view of the enormous variations in structure, there are no sharp boundaries or distinctions between polymers, oligomers, and monomers. Often the classification depends upon what is viewed as a repeating unit, viz., a mer unit. For example trimethylolpropane, chain extended with oxy-1,2-ethanediyl groups and terminated with acryloyl groups can be viewed as a monomer if the trimethylolpropane moiety is viewed as the central portion of a mer unit, or it can be viewed as a polymer or oligomer, as the case may be, if oxy-1,2-ethanediyl is regarded as a mer unit.

The number of ethylenically unsaturated groups provided by each molecule may be zero, small, or large, but collectively the molecules contain numerous ethylenically unsaturated groups. In order for crosslinked polymer to form, at least a portion of the polymer, oligomer, or monomer should contain at least two ethylenically unsaturated groups per molecule.

In most instances the ethylenic unsaturation is provided by acryloyl groups, methacryloyl groups, allyl groups, vinyl groups, fumaroyl groups, and maleoyl groups. Examples of such polymers, monomers, and oligomers which may be used include the water-soluble polyacrylates, polymethacrylates, polyfumarates, and polymaleates of low, medium, or high molecular weight water-soluble poly(ethylene oxides). Of particular importance are water-soluble poly(ethylene oxide) diacrylate [CAS 26570-48-9], water-soluble poly(ethylene oxide) dimethacrylate [CAS 25852-47-5], and water-soluble poly(ethylene oxide) dimaleate [CAS 36247-43-5]. Other examples are the water-soluble poly(vinyl alcohols) in which the hydrogens of some of the hydroxyl groups have been replaced with acryloyl or methacryloyl groups. Yet other examples include water-soluble or water-dispersible materials formed by chain extending a central unit with oxy-1,2-ethanediyl groups and terminating with acryloyl or methacryloyl groups. Examples of central groups which may be used include the oxy-1,2-ethanediyl extended aliphatic or aromatic diols, triols, and tetrols, such as for example, trimethylolpropane, glycerine, bisphenol A, propylene glycol, and pentaerythritol.

Water-soluble or water-dispersible organic polymers, oligomers, and monomers, which contain one ethylenically unsaturated group per molecule may also be present. In most instances the ethylenic unsaturation is provided by acryloyl groups, methacryloyl groups, allyl groups, vinyl groups, fumaroyl groups, and maleoyl groups. Examples of such polymers, oligomers, and monomers include the water-soluble monoacrylates, monomethacrylates, monofumarates, and monomaleates of the water-soluble poly(ethylene oxides) and the oxy-1,2-ethanediyl extended aliphatic or aromatic diols, triols, and tetrols described above. Of particular importance are water-soluble poly(ethylene oxide) monoacrylate [CAS 26403-58-7], water-soluble poly(ethylene oxide) monomethacrylate [CAS 25736-86-1], and water-soluble poly(ethylene oxide) monomaleate [CAS 37916-19-1].

Usually the ratio of the number of ethylenically unsaturated groups per gram of the film-forming organic polymer present in the interior coating composition to the number of ethylenically unsaturated groups per gram of the film-forming member present in the exterior coating composition is less than 0.9:1. Often the ratio is less than 0.1:1. Frequently the ratio is less than 0.01:1. In many instances the ratio is substantially zero.

Usually the film-forming organic polymer of the interior coating composition constitutes at least 1 percent by weight of the of the interior coating composition. Generally the film-forming organic polymer constitutes at least 3 percent by weight of the interior coating composition. In many instances the film-forming organic polymer constitutes at least 5 percent by weight of the interior coating composition. Often the film-forming organic polymer constitutes from 1 to 40 percent by weight of the interior coating composition. Frequently the film-forming organic polymer constitutes from 2 to 30 percent by weight of the interior coating composition. In many cases the film-forming organic polymer constitutes from 3 to 20 percent by weight of the interior coating composition.

Similarly the film-forming member of the exterior coating composition constitutes at least 1 percent by weight of the of the exterior coating composition. Generally the film-forming organic member constitutes at least 3 percent by weight of the exterior coating composition. In many instances the film-forming organic member constitutes at least 5 percent by weight of the exterior coating composition. Often the film-forming organic member constitutes from 1 to 40 percent by weight of the exterior coating composition. Frequently the film-forming organic member constitutes from 2 to 30 percent by weight of the exterior coating composition. In many cases the film-forming organic constitutes from 3 to 20 percent by weight of the exterior coating composition.

When the discrete nonfilm-forming particles having a number average particle size of from 1 to 500 nanometers are present in the a coating composition, they usually constitute at least 0.1 percent by weight of the of the coating composition. Generally the discrete nonfilm-forming particles having a number average particle size of from 1 to 500 nanometers constitute at least 1 percent by weight of the coating composition. In many instances the discrete nonfilm-forming particles having a number average particle size of from 1 to 500 nanometers constitute at least 2 percent by weight of the coating composition. Often the discrete nonfilm-forming particles having a number average particle size of from 1 to 500 nanometers constitute from 0.1 to 30 percent by weight of the coating composition. Frequently the discrete nonfilm-forming particles having a number average particle size of from 1 to 500 nanometers constitute from 1 to 25 percent by weight of the coating composition. In many cases the discrete nonfilm-forming particles having a number average particle size of from 1 to 500 nanometers constitute from 2 to 20 percent by weight of the coating composition.

A material which may optionally be present in the coating composition is mordant. For purposes of the present specification and claims mordant is considered not to be a part of the film-forming organic polymer. Mordants, also known as ink-fixing agents, are materials which interact, usually by reaction or absorption, with binder, dye, and/or pigment of the ink applied to the coated substrate. There are many available mordants which may be used. Suitable mordants include, but are not limited to, the poly(ethylenimines), the ethoxylated poly(ethylenimines), and other derivatives of poly(ethylenimine). Examples include Lupasol™ SC-61B ink-fixing agent (BASF Aktiengesellschaft), Lupasol™ SC-62J mordant (BASF Aktiengesellschaft), and Lupasol™ SC-86X mordant (BASF Aktiengesellschaft), Lupasol™ PS mordant (BASF Aktiengesellschaft), Lupasol™ G-35 mordant (BASF Aktiengesellschaft), and Lupasol™ FG mordant (BASF Aktiengesellschaft).

When used, the amount of mordant present in the coating composition may vary considerably. In such instances the weight ratio of the mordant to the film-forming organic polymer is usually in the range of from 0.5:100 to 30:100. Frequently the weight ratio is in the range of from 0.5:100 to 20:100. Often the weight ratio is in the range of from 1:100 to 10:100. From 2:100 to 5:100 is preferred. These ratios are on the basis of mordant dry solids and film-forming organic polymer dry solids.

Another material which may optionally be present in the coating composition is surfactant. For purposes of the present specification and claims surfactant is considered not to be a part of the film-forming organic polymer. There are many available surfactants and combinations of surfactants which may be used. Examples of suitable surfactants include, but are not limited to, Fluorad® FC-170-C surfactant (3M Company), and Triton® X-405 surfactant (Union Carbide Corporation).

When used, the amount of surfactant present in the coating composition may vary considerably. In such instances the weight ratio of the surfactant to the film-forming hydrophilic organic polymer is usually in the range of from 0.01:100 to 10:100. In many instances the weight ratio is in the range of from 0.1:100 to 10:100. Often the weight ratio is in the range of from 0.2:100 to 5:100. From 0.5:100 to 2:100 is preferred. These ratios are on the basis of surfactant dry solids and film-forming hydrophilic organic polymer dry solids.

There are many other conventional adjuvant materials which may optionally be present in the coating composition. These include such materials as lubricants, waxes, plasticizers, antioxidants, organic solvents, lakes, and pigments. The listing of such materials is by no means exhaustive. These and other ingredients may be employed in their customary amounts for their customary purposes so long as they do not seriously interfere with good coating composition formulating practice.

The coating compositions are usually prepared by simply admixing the various ingredients. The ingredients may be mixed in any order. Although the mixing of liquid and solids is usually accomplished at room temperature, elevated temperatures are sometimes used. The maximum temperature which is usable depends upon the heat stability of the ingredients.

The coatings are formed by applying coating compositions using any conventional technique known to the art. These include spraying, spinning, curtain coating, dipping, rod coating, blade coating, roller application, size press, printing, brushing, drawing, slot-die coating, and extrusion.

Exterior coating composition may be applied to the interior coating with or without significant removal of first volatile aqueous liquid from the interior coating prior to the application.

The same coating composition may be applied once or a multiplicity of times. When the same coating composition is applied a multiplicity of times, the applied coating composition may be applied with or without significant prior removal of volatile aqueous liquid from the previous coating or coatings.

Following application of a coating composition, volatile aqueous liquid may be partially or totally removed from one or more of the coatings. Following final application of the final coating composition, volatile aqueous liquid is partially or totally removed from one or more of the coatings. This may be accomplished by any conventional drying technique.

The thickness of the interior coating may vary widely, but in most instances the thickness of the interior coating is in the range of from 1 to 30 µm. In many cases the thickness of the interior coating is in the range of from 5 to 20 µm. From 8 to 18 µm is preferred.

Similarly, the thickness of the exterior coating may vary widely, but usually the thickness of the exterior coating is in the range of from 0.1 to 10 µm. Frequently the thickness of the exterior coating is in the range of from 0.5 to 5 µm. From 0.7 to 3 µm is preferred.

The substrate may be any substrate at least one surface of which is capable of bearing the coating discussed above. In most instances the substrate is in the form of an individual sheet or in the form of a roll, web, strip, film, or foil of material capable of being cut into sheets. It may be an uncoated material or it may be the exposed coating of a material which has been previously coated with one or more coatings.

The substrate may be porous throughout, it may be nonporous throughout, or it may comprise both porous regions and nonporous regions.

Examples of porous substrates include paper, paperboard, wood, cloth, nonwoven fabric, felt, unglazed ceramic material, polymer membranes, porous foam, and microporous foam.

Examples of substrates which are substantially nonporous throughout include sheets or films of organic polymer such as poly(ethylene terephthalate), polyethylene, polypropylene, cellulose acetate, poly(vinyl chloride), and copolymers such as saran. The sheets or films may be metallized or unmetallized as desired. Additional examples include metal substrates including but not limited to metal foils such as aluminum foil and copper foil. Yet another example is a porous or microporous foam comprising thermoplastic organic polymer which foam has been compressed to such an extent that the resulting deformed material is substantially nonporous. Still another example is glass.

Base stocks which are normally porous such as for example paper, paperboard, wood, cloth, nonwoven fabric, felt, unglazed ceramic material, polymer membranes, porous foam, or microporous foam may be coated or laminated to render one or more surfaces substantially nonporous and thereby provide substrates having at least one substantially nonporous surface.

The substrate may be substantially transparent, it may be substantially opaque, or it may be of intermediate transparency. For some applications such as ink jet printed overhead slides, the substrate must be sufficiently transparent to be useful for that application. For other applications such as ink jet printed paper, transparency of the substrate is not so important.

After the interior water-absorptive coating and the exterior intermediate coating have been formed on the surface of the substrate, they are exposed to actinic light, ionizing radiation, or heat to provide the exterior coating with numerous crosslinks derived from ethylenically unsaturated groups present in the hydrophilic organic polymer of the applied exterior coating composition. This process is known as "curing". Some or substantially all of the ethylenically unsaturated groups may be converted to crosslinks, as desired. The numbers of crosslinks present in the exterior coating should in any event be sufficient to increase the wet smear resistance of the inkjet printed printing medium as compared with the same exterior coating which has not been exposed to actinic light, ionizing radiation, or heat in accordance with this invention.

When the exterior intermediate coating is to be exposed to actinic light, photoinitiator, photosensitizer, or a mixture of photoinitiator and photosensitizer is usually present. Usually the actinic light is ultraviolet light having a wavelength in the range of from about 185 to about 400 nanometers.

Photoinitiators are compounds which absorb photons and thereby obtain energy to form radical pairs, at least one of which is available to initiate addition polymerization of ethylenically unsaturated groups in the well-known manner. Photosensitizers are compounds which are good absorbers of photons, but which are themselves poor photoinitiators. They absorb photons to produce excited molecules which then interact with a second compound to produce free radicals suitable for initiation of addition polymerization. The second compound may be a monomer, a polymer or an added initiator. Examples of photoinitiators are benzoin, methyl benzoin ether, butyl benzoin ether, isobutyl benzoin ether, α,α-diethoxyacetophenone and α-chloroacetophenone. Examples of photosensitizers are benzil, 1-naphthaldehyde, anthraquinone, benzophenone, 3-methoxybenzophenone, benzaldehyde, and anthrone.

The amount of photoinitiator, photosensitizer or mixture of photoinitiator and photosensitizer present in the exterior coating composition and the exterior intermediate coating can vary widely. When any of these materials is present, the amount is usually in the range of from 0.001 to 10 percent by weight of the binder of the coating composition and the exterior intermediate coating. Most often, the amount is in the range of from 0.002 to 8 percent by weight of the binder. An amount in the range of from 0.005 to 5 percent by weight of the binder is preferred. When the exterior intermediate coating is to be exposed to ionizing radiation, these materials are usually omitted from the exterior coating composition and hence from the exterior intermediate coating, although their presence is permissible.

Any-suitable source which emits ultraviolet light, viz., electromagnetic radiation having a wavelength in the range of from about 180 to about 400 nanometers, may be used in the practice-of this invention. Because such ultraviolet light possesses insufficient energy to produce ions in a medium composed of common elements such as air or water, it is considered to be nonionizing radiation. Suitable sources of ultraviolet light are mercury arcs, carbon arcs, low pressure mercury lamps, medium pressure mercury lamps, high pressure mercury lamps, swirlflow plasma arc, and ultraviolet light emitting diodes. Particularly preferred are ultraviolet light emitting lamps of the medium or high pressure mercury vapor type. Such lamps usually have fused quartz envelopes to withstand the heat and to transmit the ultraviolet radiation and are ordinarily in the form of long tubes having an electrode at both ends.

The times of exposure to actinic light and the intensity of the actinic light to which the polymerizable composition is exposed may vary greatly. Usually the exposure to actinic light is continued at least until many, and in some cases, most, of the photoinitiator and/or photosensitizer molecules have been activated.

The ionizing radiation employed in the invention is radiation possessing an energy at least sufficient to produce ions either directly or indirectly in a medium composed of common elements such as air or water, and includes ionizing particle radiation and ionizing electromagnetic radiation. Ionizing particle radiation designates the emission of electrons or accelerated nuclear particles such as protons, alpha particles, deuterons, beta particles, neutrons or their analogs. Charged particles can be accelerated using such devices as resonance chamber accelerators, DC potential gradient accelerators, betatrons, synchrotrons, cyclotrons, etc. Neutron radiation can be produced by bombarding a selected light metal such as beryllium with positively charged particles of high energy. Ionizing particle radiation can also be obtained by the use of an atomic pile, radioactive isotopes, or other natural or synthetic radioactive materials. Ionizing electromagnetic radiation comprises high energy photons. Examples are X-rays, bremsstrahlung, and gamma rays.

X-rays may be produced when a metallic target such as tungsten, copper, or molybdenum is bombarded with electrons of suitable energy. This energy is conferred to the electrons by accelerators, usually, but not necessarily, of the linear type. Traveling wave linear accelerators, standing wave linear accelerators and DC potential gradient linear accelerators are ordinarily employed for this purpose.

Bremsstrahlung, also known as continuous X-rays, is produced by the deceleration of electrons. The continuum extends from a short-wave limit dependent upon the maximum energy of the electrons indefinitely toward the long wavelength end of the spectrum.

Gamma rays may be obtained by means of a nuclear reactor, such as a pile, by the use of natural or synthetic radioactive materials such as cobalt 60 or radium which emit gamma rays, or by absorption of a neutron in the (n,γ) reaction.

The ionizing radiation, whether particle radiation or electromagnetic radiation, ordinarily has an energy of at least about 10 electron volts. While there is no upper limit to the energy of ionizing radiation which can be used advantageously, the effects desired in the practice of this invention can be accomplished without resorting to the use of ionizing radiation having energies above about 20,000,000 electron volts.

Accelerated electrons is the preferred ionizing radiation for crosslinking coatings of the radiation curable coating composition. Bremsstrahlung generated by the deceleration) of the electrons is also present and probably contributes to crosslinking. Various types of linear electron accelerators are known, for example, the ARCO type traveling wave accelerator, model Mark I, operating at 3 to 10 million electron volts supplied by High Voltage Engineering Corporation, Burlington, Massachusetts., or other types of accelerators such as are described in U.S. Patent
No. 2,763,609 and British Patent Specification No. 762,953 are satisfactory for the practice of this invention. Usually the electrons are accelerated to energies in the range of from about 10,000 electron volts to about 1,000,000 electron volts. Typically, the energy is in the range of from about 20,000 electron volts to about 500,000 electron volts. Preferably, the energy is in the range of from about 25,000 electron volts to about 200,000 electron volts.

The unit of dose of ionizing radiation is the "rad" which is equal to 100 ergs of energy absorbed from ionizing radiation per gram of material being irradiated. Dose is initially determined using an absolute method such as calorimetry or ionization dosimetry. These absolute methods are quite sophisticated and hence are not generally practical for routine determinations. Once a radiation field has been explored by an absolute method of dosimetry, it is possible to calibrate secondary radiation indicators in that field using relative dosimetry techniques. One simple method of relative dosimetry is based upon the bleaching of blue cellophane by ionizing radiation. The blue cellophane is exposed to a standard source for a known time and the transmittance of light having a wavelength of 655 nanometers is measured with a spectrophotometer. The transmittance of unexposed cellophane is also measured and the percent change in transmittance due to exposure to ionizing radiation is calculated. From several such readings and calculations, a graph may be constructed relating change in transmittance with dose. A blue cellophane manufactured by the E. I. du Pont de Nemours & Company has been used for this purpose. The calibrated blue cellophane may then be used to calibrate other sources of the same kind of radiation and other kinds of blue cellophane which may be used in routine work. Avisco cellophane 195 CMS light blue manufactured by the American Viscose Division of FMC Corporation has been calibrated and used for routine dose determinations. In practice, the calibrated blue cellophane is exposed to the ionizing radiation before, after or simultaneously with the coated substrate being irradiated. The dose received by the coating is considered to be the same as that received by the blue cellophane. This presumes that the absorption of energy by the coating is the same as that of the blue cellophane. Except for materials containing rather large proportions of atoms of very high atomic weight, the absorption of ionizing radiation is nearly independent of the identity of the material. The presumption is therefore valid for the ordinary work of coatings manufacturing where very high degrees of accuracy of dose measurement are not needed. As used throughout the specification and claims, dose is referenced to the bleaching of calibrated blue cellophane film irrespective of the identity of the coating composition being irradiated.

Coatings of the radiation curable coating composition ordinarily receive a dose of ionizing radiation in the range of from about 0.01 megarad to about 20 megarads, although doses greater than 20 megarads may be used satisfactorily. The dose, however, should not be so great that the chemical or physical properties of the coating are seriously impaired. Typically, the dose is in the range of from about 0.1 megarad to about 20 megarads. The preferred dose is in the range of from about 1 megarad to about 10 megarads.

The free radical curing of ethylenically unsaturated groups of many, but not all, coatings containing such groups is significantly inhibited by oxygen when the coatings are exposed to actinic light or ionizing radiation. In such instances the surface of the coating remains undercured. Often the oxygen inhibition is so severe that even massive exposures to very large amounts of actinic light or ionizing radiation will not cure the surface to the desired degree. When the coating has sufficient thickness and when the coating is exposed to actinic light or ionizing radiation, oxygen inhibition can result in a surface layer of the coating having a significantly lesser degree of cure than the interior of the coating.

When oxygen inhibition does occur the effect can sometimes be reduced by the inclusion of materials which inhibit oxygen inhibition. Oxygen inhibition can always be reduced by sufficiently lowering the molecular oxygen concentration of the atmosphere in contact with the coating during exposure.

Controlling oxygen inhibition can in some instances be used to vary the degree of curing in a manner that enhances wet smear resistance of the printing medium. Parameters which affect oxygen inhibition can often be used to vary wet smear resistance. Included among these are the identities of the polymers, oligomers, and monomers of the coating composition, the concentration of molecular oxygen in the atmosphere in which exposure to radiation takes place, and the intensity of the actinic light or ionizing radiation. In the case of actinic light, the identities and amounts of actinic light absorbers can sometimes be used. See United States Patent No. 4,170,663, the entire disclosure of which is incorporated herein by reference, for a discussion of general principles.

When the ethylenically unsaturated groups of the exterior intermediate coating are to be polymerized by heating the exterior intermediate coating to elevated temperatures, thermal initiator is usually present.

The thermal initiators which may be used in the present invention may be widely varied, but in general they are thermally decomposable to produce radical pairs. One or both members of the radical pair are available to initiate addition polymerization of ethylenically unsaturated groups in the well-known manner.

The preferred thermal initiators are peroxy initiators. Examples of suitable peroxy initiators include peroxydicarbonate esters such as di-n-propyl peroxydicarbonate, .diisopropyl peroxydicarbonate, di-n-butyl peroxydicarbonate, di-sec-butyl peroxydicarbonate, diisobutyl peroxydicarbonate, di(2-ethylhexyl) peroxydicarbonate, diacetyl peroxy dicarbonate, dicyclohexyl peroxydicarbonate, di(4-tert-butylcyclohexyl) peroxy dicarbonate, and isopropyl sec-butyl peroxydicarbonate; diacetyl peroxides such as diacetyl peroxide, dibenzoyl peroxide, dilauroyl peroxide, and diisobutyryl peroxide; and peroxy esters such as tertiary-butyl perpivalate, tertiary-butyl peroctoate, and tertiary-butyl perneodecanoate.

Other examples of suitable peroxy initiators include monoperoxycarbonates such as tertiary-butylperoxy isopropyl carbonate and tertiary-amyl peroxyisopropyl carbonate.

Only one initiator or a plurality of thermal initiators may be used as desired.

The amount of thermal initiator present in the exterior coating composition and the exterior intermediate coating can vary widely. When thermal initiator is present, the amount is usually in the range of from 0.001 to 10 percent by weight of the binder of the coating composition and the exterior intermediate coating. Most often, the amount is in the range of from 0.01 to 8 percent by weight of the binder. An amount in the range of from 0.1 to 5 percent by weight of the binder is preferred.

Usually thermal polymerization is conducted at temperatures in the range of from 28°C to 150°C. Often the temperature is in the range of from 35°C to 140°C. In many instances the temperature is in the range of from 50°C to 130°C.

The times of exposure to elevated temperatures may vary greatly. Generally, heating is continued until most of the ethylenically unsaturated groups are polymerized.

The coatings may collectively be substantially transparent, substantially opaque, or of intermediate transparency. They may be substantially colorless, they may be highly colored, or they may be of an intermediate degree of color. Preferably the coatings are substantially transparent and substantially colorless. As used herein and in the claims, the coatings are collectively transparent if their luminous transmission in the visible region is at least 80 percent of the incident light. Often the luminous transmission of the coating is at least 85 percent of the incident light. Preferably the collective luminous transmission of the coatings is at least 90 percent. Also as used herein and in the claims, the coatings are collectively colorless if the luminous transmission is substantially the same for all wavelengths in the visible region, viz., 400 to 800 nanometers.

The gloss of the exterior water-absorptive coating of the printing medium may vary widely. Although lower glosses are acceptable for many purposes, it is preferred that the gloss be at least 20. As used herein gloss is determined according to TAPPI Standard T653 pm-90.

The exterior coating may optionally be printed upon by applying liquid ink droplets to the exterior coating. This is most often accomplished by inkjet printing.

The liquid ink droplets may be applied to the exterior coating before second volatile aqueous liquid is removed from the exterior coating or after second volatile aqueous liquid has been removed from the exterior coating.

The liquid ink droplets may be applied to the exterior coating before the substrate, the interior coating, and the exterior coating are exposed to actinic light, ionizing radiation, or heat to provide the exterior coating with numerous crosslinks derived from ethylenically unsaturated groups present in the applied exterior coating composition. Alternatively the liquid ink droplets may be applied to the exterior coating after the substrate, the interior coating, and the exterior coating have been exposed to actinic light, ionizing radiation, or heat to provide the exterior coating with numerous crosslinks derived from ethylenically unsaturated groups present in the applied exterior coating composition.

The invention is further described in conjunction with the following examples which are to be considered illustrative rather than limiting, and in which all parts are parts by weight and all percentages are percentages by weight unless otherwise specified.

### EXAMPLE 1

The charges shown in Table 1 were used in the preparation of a cationic acrylic polymer aqueous dispersion.

**TABLE 1**

| Ingredients | Weight, kilograms |
|---|---|
| Charge 1 | |
| Methyl ethyl ketone | 55.93 |

| Charge 2 | |
|---|---|
| Methyl ethyl ketone | 28.67 |
| Initiator¹ | 10.16 |

| Charge 3 | |
|---|---|
| n-Butyl acrylate | 30.44 |
| Methyl methacrylate 2-(tert-Butylamino)ethyl methacrylate | 87.32 |
| [CAS 3775-90-4] | 40.64 |
| Styrene | 44.68 |

| Charge 4 | |
|---|---|
| Methyl ethyl ketone | 2.27 |

| Charge 5 | |
|---|---|
| Methyl ethyl ketone | 2.27 |

| Charge 6 | |
|---|---|
| Glacial acetic acid | 9.89 |
| Methyl ethyl ketone | 2.27 |

| Charge 7 | |
|---|---|
| Deionized water | 579.1 |

| Charge 8 | |
|---|---|
| Deionized water | 11.1 |

| | |
|---|---|
| ¹ VAZO® 67 2,2'-Azobis(2-methylbutanenitrile) initiator, E. I. du Pont de Nemours and Company, Wilmington, Delaware. | |

Charge 1 was heated in a reactor with agitation to reflux temperature (80°C). The addition of Charge 2 from a catalyst tank to the reactor was then begun. The addition of Charge 2 was made over a period of 305 minutes. Five minutes after beginning the addition of Charge 2, the addition of Charge 3 from a monomer tank was begun. The addition of Charge 3 was made over a period of 240 minutes. When the addition of Charge 3 was completed, Charge 4 was added to the monomer tank as a rinse and then the rinse liquid was added from the monomer tank to the reactor over a period of 10 minutes. Upon completion of the addition of Charge 2, Charge 5 was added to the catalyst tank as a rinse and then the rinse liquid was added from the catalyst tank to the reactor over a period of 10 minutes. The reaction mixture was then agitated at reflux for three hours while the temperature of the reaction mixture was in the range of from 83°C to 86°C. At the end of the three hour period, the reaction mixture was cooled to temperatures in the range of from 48°C to 52°C. Charge 6 was added over a period of 10 minutes and the reaction mixture was thereafter agitated for 15 minutes. Charge 7 was added to a thinning tank equipped for distillation and heated to temperatures in the range of from 48°C to 52°C. The reaction mixture was dropped from the reactor to the thinning tank as quickly as possible. Charge 8 was added to the reactor as a rinse and then the rinse liquid was also dropped to the thinning tank. The contents of the thinning tank were agitated for 30 minutes at temperatures in the range of from 48°C to 52°C. Over a thirty minute period the pressure was reduced to 71.3 kilopascals, absolute. The temperature was then increased and liquid was stripped off under vacuum until the solids content of the batch was about 30 percent by weight. The resulting product which was a cationic acrylic polymer aqueous dispersion, was cooled to about 48°C, filtered, and then discharged into drums.

The charges shown in Table 2 were used in the preparation of a first quaternary cationic polymer aqueous composition.

**TABLE 1**

| Ingredients | Weight, kilograms |
|---|---|
| Charge 1 | |
| Deionized water | 100.0 |
| Aqueous isopropanol¹ | 200.0 |
| Initiator² | 5.0 |

| Charge 2 | |
|---|---|
| Methyl methacrylate | 20.0 |
| Styrene | 20.0 |
| n-Butyl acrylate | 15.0 |
| Aqueous quaternary monomer³ | 56.3 |

| | |
|---|---|
| ¹ 70% isopropanol, 30% water, by weight. | |
| ² VAZO® 67 2,2'-Azobis(2-methylbutanenitrile) initiator, E. I. du Pont de Nemours and Company, Wilmington, Delaware. | |
| ³ 80% [2-(methacryloyloxy)ethyl]trimethyl ammonium methylsulfate, 20% water, by weight. | |

Charge 1 was heated to 75°C. Charge 2 was introduced to Charge 1 at 75°C over a period of 3 hours. The reaction mixture was then stirred for 5 hours at 80°C. The isopropanol was removed by stripping on a Rotovap at 60°C. Water was added to provide a first quaternary cationic polymer aqueous composition having a solids content of 25.5% by weight.

Disperal P2 pseudoboehmite powder (Condea, Germany) (140 grams) was gradually added to dilute nitric acid aqueous solution (860 grams, 0.25%) under stirring. The mixture was stirred until a translucent pseudoboehmite dispersion was obtained.

To a plastic container, an aqueous solution of polyethylene oxide having a weight average molecular weight in the range of from 300,000 to 450, 000 (200 grams, 6%) was added. While the solution was under stirring, a portion of the above cationic acrylic polymer aqueous dispersion (24.0 grams, 29.4%), a portion of the above quaternary cationic polymer aqueous composition (40.0 grams, 25.5%), a portion of the above pseudoboehmite dispersion (60.0 grams, 14%) and Cymel 1172 urea/glyoxal adduct (Cytec Industries Inc., West Patterson, New Jersey) (3.3 grams, 50%) were added. After each addition the mixture was stirred until a homogeneous aqueous dispersion was obtained. The product was an interior coating composition.

To another plastic container, an aqueous solution of polyethylene oxide having a weight average molecular weight in the range of from 300,000 to 450, 000 (280 grams, 6%) was added. While the solution was under stirring, a portion of the above pseudoboehmite dispersion (72.0 grams, 14%), ChemCor 540C cationic polyethylene polyemulsion (ChemCor Inc., Chester, New York) (11.7 grams, 25%), Sartomer SR415 triacrylate-terminated ethoxylated trimethylolpropane (12.0 grams, 100%), and Cymel 1172 urea/glyoxal adduct (3.3 grams, 50%) were added. After each addition the mixture was stirred until a homogeneous aqueous dispersion was obtained. At the end, Darocure 1173 hydroxymethylphenylpropanone photoinitiator (Ciba-Geigy Corp., Tarrytown, New York (0.4 grams) was added, and the aqueous dispersion was stirred for 10 minutes to produce an exterior coating composition.

A portion of the interior coating composition was drawn down on Glory Base photograde basestock paper (Felix Schoeller, Germany) using Meyer Rod #160. The wet coating was dried in an oven at 105°C for 3.5 minutes to form an interior coating on the substrate. The thickness of the interior coating was about 15 µm. A portion of the exterior coating composition was coated on the interior coating by rod coating using as Meyer Rod #14. The wet coating was dried in the oven at 105°C for 3.5 minutes to produce an exterior coating. The thickness of the exterior coating was in the range of from 1 to 2 µm.

The coated substrate was passed once, at a speed of 21.3 meters/min, in an air atmosphere, under two mercury vapor arc lamps which were emitting ultraviolet light. The lamps were positioned 6 inches above the surface of the coated substrate as it passed under the lamps. The dose was 500 mJ/cm². The product was a printing medium.

### EXAMPLE 2

A printing medium was prepared as described in Example 1 except that exposure to ultraviolet light was conducted in a nitrogen atmosphere in which the oxygen content was maintained below 100 ppm.

### EXAMPLE 3

The charges shown in Table 3 were used in the preparation of a second quaternary cationic polymer aqueous composition.

**TABLE 3**

| Ingredients | Weight, kilograms |
|---|---|
| Charge 1 | |
| Isopropanol | 100.0 |

| Charge 2 | |
|---|---|
| Isopropanol | 106.5 |
| Initiator¹ | 18.2 |

| Charge 3 | |
|---|---|
| Isopropanol | 205.7 |
| Styrene | 182.5 |
| Aqueous quaternary monomer² | 243.3 |

| Charge 4 | |
|---|---|
| Deionized Water | 790 |

| | |
|---|---|
| ¹ VAZO® 67 2,2'-Azobis(2-methylbutanenitrile) initiator, E. I. du Pont de Nemours and Company, Wilmington, Delaware. | |
| ² 75% [2-(methacryloyloxy)ethyl]trimethyl ammonium chloride, 20% water, by weight. | |

Charge 1 was heated in a reactor with agitation to reflux (77 C - 80°C). At a reflux, Charge 2 was added over a period of 3 hours. After Charge 2 had been added, the addition of Charge 3 was begun. Charge 3 was added over a period of 3 hours. Charge 4 was added to the catalyst tank and the monomer tank as a rinse and used for further additions of deionized water. Upon completion of the additions of Charge 2 and Charge 3, the reaction mixture was agitated at reflux for 4 hours. The reactor was then set for total distillation. About 300 grams of deionized water was added to the reactor, the jacket temperature was reduced, and vacuum was applied slowly. Vacuum distillation was begun. After collecting 491 grams of distillates, and additional 490 grams of deionized water was added and vacuum distillation was continued. After most of the isopropanol had been removed, the percent solids was determined and the product was adjusted to 29.5 percent solids (as determined by weight difference of a sample before and after heating at 110°C for one hour. The product which was a second quaternary cationic polymer aqueous composition, was filtered through a 5 micrometer glass fiber filter.

To a plastic container, an aqueous solution of polyethylene oxide having a weight average molecular weight in the range of from 300,000 to 450, 000 (200 grams, 6%) was added. While the solution was under stirring, a portion of the above cationic acrylic polymer aqueous dispersion (48.5 grams, 29.4%), a portion of the second quaternary cationic polymer aqueous composition (7.6 grams, 29.5%), a portion of the above pseudoboehmite dispersion (50 grams, 14%) and Cymel 1172 urea/glyoxal adduct (5.3 grams, 50%) were added. After each addition the mixture was stirred until a homogeneous aqueous dispersion was obtained. The product was an interior coating composition.

To another plastic container, an aqueous solution of polyethylene oxide having a weight average molecular weight in the range of from 300,000 to 450, 000 (200 grams, 6%) was added. While the solution was under stirring, a portion of the above alumina dispersion (71.5 grams, 14%), a portion of the above cationic acrylic polymer aqueous dispersion (48.5 grams, 29.4%), ChemCor 540C cationic polyethylene polyemulsion (16.0 grams, 25%), Sartomer SR415 triacrylate-terminated ethoxylated trimethylolpropane (12.0 grams, 100%), Cymel 1172 urea/glyoxal adduct (3.3 grams, 50%) were added. After each addition, the mixture was stirred until a homogeneous aqueous dispersion was obtained. At the end, Darocure 1173 hydroxymethylphenylpropanone photoinitiator (0.4 grams) was added, and the solution was stirred for 10 minutes to produce an exterior coating composition.

A portion of the interior coating composition was drawn down on Glory Base paper using a Meyer Rod #160. The wet coating was dried in an oven at 105°C for 3.5 minutes to form an interior coating on the substrate. The thickness of the interior coating was about 15 µm. A portion of the exterior coating composition was drawn down or the interior coating using a Meyer Rod #14. The wet coating was dried in the oven at 105°C for 3.5 minutes to produce an exterior coating. The thickness of the exterior coating was in the range of from 1 to 2 µm.

The coated substrate was passed once, at a speed of 21.3 meters/min, in an air atmosphere, under two mercury vapor arc lamps which were emitting ultraviolet light. The lamps were positioned 6 inches above the surface of the coated substrate as it passed under the lamps. The dose was 500 mJ/cm². The product was a printing medium.

### EXAMPLE 4

To a plastic container, an aqueous solution of polyethylene oxide having a weight average molecular weight in the range of from 300,000 to 450, 000 (280 grams, 6%) was added. While the solution was under stirring, a portion of the above alumina dispersion (72.0 grams, 14%), ChemCor 540C cationic polyethylene polyemulsion (11.7 grams, 25%), Sartomer SR415 triacrylate-terminated ethoxylated trimethylolpropane (12.0 grams, 100%), and Cymel 1172 urea/glyoxal adduct (3.3 grams, 50%) were added. After each addition the mixture was stirred until a homogeneous aqueous dispersion was obtained. The resulting product was an exterior coating composition.

A portion of the interior coating composition of Example 1 was drawn down on Glory Base paper using a Meyer Rod #160. The wet coating was dried in an oven at 105°C for 3.5 minutes to form an interior coating on the substrate. The thickness of the interior coating was about 15 µm. A portion of the exterior coating composition of this Example 4 was drawn down on the interior coating using a Meyer Rod #14. The wet coating was dried in the oven at 105°C for 3.5 minutes to produce an exterior coating. The thickness of the exterior coating was in the range of from 1 to 2 µm.

The coated substrate was passed once, at a speed of 4.18 meters/min, in an air atmosphere, through an electron beam processing system, 300 KeV-15mA, self shielded unit, manufactured by High Voltage Engineering, Inc. The operating conditions were 210 KeV and 5 mA. A dosimeter was used to measure the exposure to radiation. The dose received by the coated substrate was 5 Megarads. The resulting product was a printing medium.

### Example 5

To a plastic container, an aqueous solution of polyethylene oxide having a weight average molecular weight in the range of from 300,000 to 450, 000 (200 grams, 6%) was added. While the solution was under stirring, a portion of the above alumina dispersion (60 grams, 14%), a portion of the above cationic acrylic polymer aqueous dispersion (28.0 grams, 29.4%), a portion of the first quaternary cationic polymer aqueous composition (25.4 grams, 25.5%), ChemCor 540C cationic polyethylene polyemulsion (16.0 grams, 25%), Sartomer SR415 triacrylate-terminated ethoxylated trimethylolpropane (10.0 grams, 100%), Cymel172 durea/glyoxal adduct (3.6 grams, 50%) were added. After each addition, the mixture was stirred until a homogeneous aqueous dispersion was obtained. The resulting product was an exterior coating composition.

A portion of the interior coating composition of Example 3 was drawn down on Glory Base paper using a Meyer Rod #160. The wet coating was dried in an oven at 105°C for 3.5 minutes to form an interior coating on the substrate. The thickness of the interior coating was about 15 µm. A portion of the exterior coating composition of this Example 5 was drawn down on the interior coating by rod coating using a Meyer Rod #14. The wet coating was dried in the oven at 105°C for 3.5 minutes to produce an exterior coating. The thickness of the exterior coating was in the range of from 1 to 2 µm.

The coated substrate was passed once, at a speed of 4.18 meters/min, in an air atmosphere, through the electron beam processing system described in Example 4. The operating conditions were 210 KeV and 5 mA. A dosimeter was used to measure the exposure to radiation. The dose received by the coated substrate was 5 Megarads. The resulting product was a printing medium.

Although the present invention has been described with reference to specific details of certain embodiments thereof, it is not intended that such details should be regarded as limitations upon the scope of the invention except insofar as they are included in the accompanying claims.

## Claims

1. A process comprising:
(a) providing a substrate having at least one surface;
(b) forming an interior coating on the surface by applying to the surface an interior coating composition comprising:
(1) first volatile aqueous liquid; and
(2) water-solublized or water-dispersed film-forming hydrophilic organic polymer which is substantially free from ethylenically unsaturated groups or which contains only few ethylenically unsaturated groups;
(c) forming an exterior coating on the interior coating by applying to the interior coating an exterior coating composition comprising:
(1) second volatile aqueous liquid; and
(2) a film-forming member selected from the group consisting of:
(A) water-solubilized film-forming hydrophilic organic polymer which contains numerous ethylenically unsaturated groups,
(B) water-dispersed film-forming hydrophilic organic polymer which contains numerous ethylenically unsaturated groups,
(C) water-solubilized film-forming hydrophilic organic oligomer which contains numerous ethylenically unsaturated groups,
(D) water-dispersed film-forming hydrophilic organic oligomer which contains numerous ethylenically unsaturated groups,
(E) water-solubilized film-forming hydrophilic organic monomer which contains numerous ethylenically unsaturated groups,
(F) water-dispersed film-forming hydrophilic organic monomer which contains numerous ethylenically unsaturated groups, and
(G) a mixture of two or more thereof; and
(d) exposing the substrate, the interior coating, and the exterior coating to actinic light, ionizing radiation, or heat to provide the exterior coating with numerous crosslinks derived from ethylenically unsaturated groups present in the applied exterior coating composition;
wherein:
(e) the interior coating composition, the exterior coating composition, or each of the interior coating composition and the exterior coating composition further comprises discrete particles which are not film-forming and which have a number average particle size in the range of from 1 to 500 nanometers;
(f) first volatile aqueous liquid is removed from the interior coating to produce an interior water-absorptive coating on the surface of the substrate; and
(g) second volatile aqueous liquid is removed from the exterior coating to produce an exterior water-absorptive coating on the surface of the interior water-absorptive coating.

2. The process of claim 1 wherein the interior coating composition comprises discrete particles which are not film-forming and which have a number average particle size in the range of from 1 to 500 nanometers.

3. The process of claim 1 wherein the exterior coating composition comprises discrete particles which are not film-forming and which have a number average particle size in the range of from 1 to 500 nanometers.

4. The process of claim 1 wherein each of the interior coating composition and the exterior coating composition comprises discrete particles which are not film-forming and which have a number average particle size in the range of from 1 to 500 nanometers.

5. The process of claim 1 wherein first volatile aqueous liquid is removed from the interior coating before application of the exterior coating composition to the interior coating.

6. The process of claim 1 wherein first volatile aqueous liquid is removed from the interior coating after application of the exterior coating composition to the interior coating.

7. The process of claim 1 wherein second volatile aqueous liquid is removed from the exterior coating before exposing the substrate, the interior coating, and the exterior coating to actinic light, ionizing radiation, or heat to provide the exterior coating with numerous crosslinks derived from ethylenically unsaturated groups present in the film-forming member of the applied exterior coating composition.

8. The process of claim 1 wherein first volatile aqueous liquid is removed from the interior coating and second volatile aqueous liquid is removed from the exterior coating before exposing the substrate, the interior coating, and the exterior coating to actinic light, ionizing radiation, or heat to provide the exterior coating with numerous crosslinks derived from ethylenically unsaturated groups present in the film-forming member of the applied exterior coating composition.

9. The process of claim 1 wherein second volatile aqueous liquid is removed from the exterior coating after exposing the substrate, the interior coating, and the exterior coating to actinic light, ionizing radiation, or heat to provide the exterior coating with numerous crosslinks derived from ethylenically unsaturated groups present in the film-forming member of the applied exterior coating composition.

10. The process of claim 1 wherein first volatile aqueous liquid is removed from the interior coating and second volatile aqueous liquid is removed from the exterior coating after exposing the substrate, the interior coating, and the exterior coating to actinic light, ionizing radiation, or heat to provide the exterior coating with numerous crosslinks derived from ethylenically unsaturated groups present in the film-forming member of the applied exterior coating composition.

11. The process of claim 1 which further comprises printing on the exterior coating by applying liquid ink droplets to the exterior coating.

12. The process of claim 11 wherein the liquid ink droplets are applied to the exterior coating before second volatile aqueous liquid is removed from the exterior coating.

13. The process of claim 11 wherein the liquid ink droplets are applied to the exterior coating after second volatile aqueous liquid has been removed from the exterior coating.

14. The process of claim 11 wherein the liquid ink droplets are applied to the exterior coating before the substrate, the interior coating, and the exterior coating are exposed to actinic light, ionizing radiation, or heat to provide the exterior coating with numerous crosslinks derived from ethylenically unsaturated groups present in the applied exterior coating composition.

15. The process of claim 11 wherein the liquid ink droplets are applied to the exterior coating after the substrate, the interior coating, and the exterior coating have been exposed to actinic light, ionizing radiation, or heat to provide the exterior coating with numerous crosslinks derived from ethylenically unsaturated groups present in the applied exterior coating composition.

16. The process of claim 1 wherein the discrete particles are discrete particles of alumina, silica, or titania.

17. The process of claim 1 wherein the discrete particles are discrete particles of alumina monohydroxide.

18. The process of claim 1 wherein the discrete particles are discrete particles of pseudoboehmite.

19. The process of claim 1 wherein discrete nonfilm-forming particles constitute from 1 to 80 percent by weight of the interior coating composition, the exterior coating composition, or each of the interior coating composition and the exterior coating composition.

20. The process of claim 1 wherein the water-solublized or water-dispersed film-forming hydrophilic organic polymer of the interior coating composition comprises poly(ethylene oxide), poly(vinyl alcohol), poly(vinyl pyrrolidone), water-soluble cellulosic organic polymer, or a mixture of two or more thereof.

21. The process of claim 20 wherein the film-forming hydrophilic organic polymer of the interior coating composition comprises water-soluble poly(ethylene oxide) having a weight average molecular weight in the range of from 100,000 to 3,000,000.

22. The process of claim 1 wherein the water-solublized or water-dispersed film-forming hydrophilic organic polymer of the exterior coating composition comprises poly(ethylene oxide), poly(vinyl alcohol), poly(vinyl pyrrolidone), water-soluble cellulosic organic polymer, or a mixture of two or more thereof.

23. The process of claim 22 wherein the film-forming hydrophilic organic polymer of the exterior coating composition comprises water-soluble poly(ethylene oxide) having a weight average molecular weight in the range of from 100,000 to 3,000,000.

24. The process of claim 1 wherein the ratio of the number of ethylenically unsaturated groups per gram of the film-forming organic polymer present in the interior coating composition to the number of ethylenically unsaturated groups per gram of the film-forming member present in the exterior coating composition is less than 0.9:1.

25. The process of claim 1 wherein the film-forming organic polymer of the interior coating composition independently constitutes at least 1 percent by weight of the of the interior coating composition and the film-forming member of the exterior coating composition constitutes at least 1 percent by weight of the of the exterior coating composition.

26. The process of claim 1 wherein the discrete nonfilm-forming particles having a number average particle size of from 1 to 500 nanometers constitute at least 0.1 percent by weight of the of the interior coating composition, the exterior coating composition, or each of the interior coating composition and the exterior coating composition.

27. The process of claim 1 wherein the substrate, the interior coating, and the exterior coating are exposed to ultraviolet light to provide the exterior coating with numerous crosslinks derived from ethylenically unsaturated groups present in the applied exterior coating composition.

28. An article comprising:
(a) a substrate having at least one surface;
(b) an interior water-absorptive coating on the surface wherein the interior water-absorptive coating comprises hydrophilic organic polymer which is substantially free from crosslinks derived from ethylenic unsaturation or which contains few crosslinks derived from ethylenic unsaturation; and
(c) an exterior water-absorptive coating on the interior water-absorptive coating wherein the exterior water-absorptive coating comprises hydrophilic organic polymer which contains numerous crosslinks derived from ethylenic unsaturation;
wherein:
(d) the interior coating, the exterior coating , or each of the interior coating and the exterior coating further comprises discrete particles having a number average particle size in the range of from 1 to 500 nanometers.

29. The article of claim 28 obtainable by a method according to any of claims 11-26.

30. The article of any of claims 28 or 29 wherein the thickness of the interior coating is in the range of from 1 to 30 µm and the thickness of the exterior coating is in the range of from 0.1 to 10 µm.

## Patentansprüche

1. Verfahren umfassend:
(a) Zur-Verfügung-Stellen eines Substrats mit wenigstens einer Oberfläche,
(b) Ausbilden einer inneren Beschichtung auf der Oberfläche durch Aufbringen auf die Oberfläche einer Zusammensetzung für die innere Beschichtung, enthaltend:
(1) eine erste flüchtige wässrige Flüssigkeit und
(2) ein in Wasser gelöstes oder in Wasser dispergiertes filmbildendes hydrophiles organisches Polymer, das im Wesentlichen frei von ethylenisch ungesättigten Gruppen ist oder das nur wenige ethylenisch ungesättigte Gruppen enthält,
(c) Ausbilden einer äußeren Beschichtung auf der inneren Beschichtung durch Aufbringen auf die innere Beschichtung einer Zusammensetzung für die äußere Beschichtung, enthaltend:
(1) eine zweite flüchtige wässrige Flüssigkeit und
(2) ein filmbildendes Mitglied, ausgewählt aus der Gruppe bestehend aus:
(A) einem in Wasser gelösten filmbildenden hydrophilen organischen Polymer, das zahlreiche ethylenisch ungesättigte Gruppen enthält,
(B) einem in Wasser dispergierten filmbildenden hydrophilen organischen Polymer, das zahlreiche ethylenisch ungesättigte Gruppen enthält,
(C) einem in Wasser gelösten filmbildenden hydrophilen organischen Oligomer, das zahlreiche ethylenisch ungesättigte Gruppen enthält,
(D) einem in Wasser dispergierten filmbildenden hydrophilen organischen Oligomer, das zahlreiche ethylenisch ungesättigte Gruppen enthält,
(E) einem in Wasser gelösten filmbildenden hydrophilen organischen Monomer, das zahlreiche ethylenisch ungesättigte Gruppen enthält,
(F) einem in Wasser dispergierten filmbildenden hydrophilen organischen Monomer, das zahlreiche ethylenisch ungesättigte Gruppen enthält, und
(G) einer Mischung aus zwei oder mehreren davon und
(d) Einwirkung von aktinischem Licht, ionisierender Strahlung oder Wärme auf das Substrat, die innere Beschichtung und die äußere Beschichtung, um die äußere Beschichtung mit zahlreichen Vernetzungen zu versehen, die sich von ethylenisch ungesättigten Gruppen, die in der aufgebrachten Zusammensetzung für die äußere Beschichtung vorhanden sind, ableiten,
worin:
(e) die Zusammensetzung für die innere Beschichtung, die Zusammensetzung für die äußere Beschichtung oder sowohl die Zusammensetzung für die innere Beschichtung als auch die äußere Beschichtung zusätzlich diskrete Teilchen enthält, die nicht filmbildend sind und die eine zahlenmittlere Teilchengröße im Bereich von 1 bis 500 nm aufweisen,
(f) die erste flüchtige wässrige Flüssigkeit aus der inneren Beschichtung entfernt wird, um eine innere wasserabsorbierende Beschichtung auf der Oberfläche des Substrats herzustellen, und
(g) die zweite flüchtige wässrige Flüssigkeit von der äußeren Beschichtung entfernt wird, um eine äußere wasserabsorbierende Beschichtung auf der Oberfläche der inneren wasserabsorbierenden Beschichtung herzustellen.

2. Verfahren nach Anspruch 1, wobei die Zusammensetzung für die innere Beschichtung diskrete Teilchen enthält, die nicht filmbildend sind und die eine zahlenmittlere Teilchengröße im Bereich von 1 bis 500 nm aufweisen.

3. Verfahren nach Anspruch 1, wobei die Zusammensetzung für die äußere Beschichtung diskrete Teilchen enthält, die nicht filmbildend sind und die eine zahlenmittlere Teilchengröße im Bereich von 1 bis 500 nm aufweisen.

4. Verfahren nach Anspruch 1, wobei sowohl die Zusammensetzung für die innere Beschichtung als auch die äußere Beschichtung diskrete Teilchen enthält, die nicht filmbildend sind und eine zahlenmittlere Teilchengröße im Bereich von 1 bis 500 nm aufweisen.

5. Verfahren nach Anspruch 1, wobei die erste flüchtige wässrige Flüssigkeit aus der inneren Beschichtung vor dem Aufbringen der äußeren Beschichtung auf die innere Beschichtung entfernt wird.

6. Verfahren nach Anspruch 1, wobei die erste flüchtige wässrige Flüssigkeit aus der inneren Beschichtung nach Aufbringen der Zusammensetzung für die äußere Beschichtung auf die innere Beschichtung entfernt wird.

7. Verfahren nach Anspruch 1, wobei die zweite flüchtige wässrige Flüssigkeit aus der äußeren Beschichtung entfernt wird, bevor das Substrat, die innere Beschichtung und die äußere Beschichtung aktinischem Licht, ionisierender Strahlung oder Hitze ausgesetzt werden, um die äußere Beschichtung mit zahlreichen Vernetzungen zu versehen, die sich von ethylenisch ungesättigten Gruppen ableiten, die in dem filmbildenden Mitglied der aufgebrachten Zusammensetzung für die äußere Beschichtung vorhanden sind.

8. Verfahren nach Anspruch 1, wobei die erste flüchtige wässrige Flüssigkeit aus der inneren Beschichtung und die zweite flüchtige wässrige Flüssigkeit aus der äußeren Beschichtung entfernt werden, bevor das Substrat, die innere Beschichtung und die äußere Beschichtung aktinischem Licht, ionisierender Strahlung oder Hitze ausgesetzt werden, um die äußere Beschichtung mit zahlreichen Vernetzungen zu versehen, die sich von ethylenisch ungesättigten Gruppen ableiten, die in dem filmbildenden Mitglied der aufgebrachten Zusammensetzung für die äußere Beschichtung vorhanden sind.

9. Verfahren nach Anspruch 1, wobei die zweite flüchtige wässrige Flüssigkeit aus der äußeren Beschichtung entfernt wird, nachdem das Substrat, die innere Beschichtung und die äußere Beschichtung aktinischem Licht, ionisierender Strahlung oder Hitze ausgesetzt wurden, um die äußere Beschichtung mit zahlreichen Vernetzungen zu versehen, die sich von ethylenisch ungesättigten Gruppen ableiten, die in dem filmbildenden Mitglied der aufgebrachten Zusammensetzung für die äußere Beschichtung vorhanden sind.

10. Verfahren nach Anspruch 1, wobei die erste flüchtige wässrige Flüssigkeit aus der inneren Beschichtung und die zweite flüchtige wässrige Flüssigkeit aus der äußeren Beschichtung entfernt werden, nachdem das Substrat, die innere Beschichtung und die äußere Beschichtung aktinischem Licht, ionisierender Strahlung oder Hitze ausgesetzt wurden, um die äußere Schicht mit zahlreichen Vernetzungen zu versehen, die sich von ethylenisch ungesättigten Gruppen ableiten, die in dem filmbildenden Mitglied der aufgebrachten Zusammensetzung für die äußere Beschichtung vorhanden sind.

11. Verfahren nach Anspruch 1, das außerdem das Bedrucken der äußeren Beschichtung durch Aufbringen von flüssigen Tintentröpfchen auf die äußere Beschichtung umfasst.

12. Verfahren nach Anspruch 11, wobei die flüssigen Tintentröpfchen auf die äußere Beschichtung aufgebracht werden, bevor die zweite flüchtige wässrige Flüssigkeit aus der äußeren Beschichtung entfernt wird.

13. Verfahren nach Anspruch 11, wobei die flüssigen Tintentröpfchen auf die äußere Oberfläche aufgebracht werden, nachdem die zweite flüchtige wässrige Flüssigkeit aus der äußeren Beschichtung entfernt worden ist.

14. Verfahren nach Anspruch 11, wobei die flüssigen Tintentröpfchen auf die äußere Beschichtung aufgebracht werden, bevor das Substrat, die innere Beschichtung und die äußere Beschichtung aktinischem Licht, ionisierender Strahlung oder Hitze ausgesetzt werden, um die äußere Beschichtung mit zahlreichen Vernetzungen zu versehen, die sich von ethylenisch ungesättigten Gruppen ableiten, die in der aufgebrachten Zusammensetzung für die äußere Beschichtung vorhanden sind.

15. Verfahren nach Anspruch 11, wobei die flüssigen Tintentröpfchen auf die äußere Beschichtung aufgebracht werden, nachdem das Substrat, die innere Beschichtung und die äußere Beschichtung aktinischem Licht, ionisierender Strahlung oder Hitze ausgesetzt wurden, um die äußere Beschichtung mit zahlreichen Vernetzungen zu versehen, die sich von ethylenisch ungesättigten Gruppen ableiten, die in der aufgebrachten Zusammensetzung für die äußere Beschichtung vorhanden sind.

16. Verfahren nach Anspruch 1, wobei die diskreten Teilchen diskrete Teilchen von Aluminiumoxid, Siliciumdioxid oder Titandioxid sind.

17. Verfahren nach Anspruch 1, wobei die diskreten Teilchen diskrete Teilchen von Aluminiumoxidmonohydroxid sind.

18. Verfahren nach Anspruch 1, wobei die diskreten Teilchen diskrete Teilchen von Pseudoboehmit sind.

19. Verfahren nach Anspruch 1, wobei die diskreten nicht filmbildenden Teilchen 1 bis 80 Gew.-% der Zusammensetzung für die innere Beschichtung, der Zusammensetzung für die äußere Beschichtung oder sowohl der Zusammensetzung für die innere als auch die äußere Beschichtung ausmachen.

20. Verfahren nach Anspruch 1, wobei das in Wasser gelöste oder in Wasser dispergierte filmbildende hydrophile organische Polymer der Zusammensetzung für die innere Beschichtung Poly(ethylenoxid), Poly(vinylalkohol), Poly(vinylpyrrolidon), wasserlösliches celluloseartiges organisches Polymer oder eine Mischung aus zwei oder mehreren davon enthält.

21. Verfahren nach Anspruch 20, worin das filmbildende hydrophile organische Polymer der Zusammensetzung für die innere Beschichtung wasserlösliches Poly(ethylenoxid) mit einem gewichtsgemittelten Molekulargewicht im Bereich von 100.000 bis 3.000.000 enthält.

22. Verfahren nach Anspruch 1, wobei das in Wasser gelöste oder in Wasser dispergierte filmbildende hydrophile organische Polymer der Zusammensetzung für die äußere Beschichtung Poly(ethylenoxid), Poly(vinylalkohol), Poly(vinylpyrrolidon), wasserlösliches celluloseartiges organisches Polymer oder eine Mischung aus zwei oder mehreren davon enthält.

23. Verfahren nach Anspruch 22, wobei das filmbildende hydrophile organische Polymer der Zusammensetzung für die äußere Beschichtung wasserlösliches Poly(ethylenoxid) mit einem gewichtsgemittelten Molekulargewicht im Bereich von 100.000 bis 3.000.000 enthält.

24. Verfahren nach Anspruch 1, wobei das Verhältnis der Zahl von ethylenisch ungesättigten Gruppen pro Gramm des filmbildenden organischen Polymers, das in der Zusammensetzung für die innere Beschichtung vorhanden ist, zu der Zahl an ethylenisch ungesättigten Gruppen pro Gramm des filmbildenden Mitglieds, das in der Zusammensetzung für die äußere Beschichtung vorhanden ist, weniger als 0,9:1 beträgt.

25. Verfahren nach Anspruch 1, wobei das filmbildende organische Polymer der Zusammensetzung für die innere Beschichtung wenigstens 1 Gew.-% der Zusammensetzung für die innere Beschichtung ausmacht und das filmbildende Mitglied für die Zusammensetzung der äußeren Beschichtung wenigstens 1 Gew.-% der Zusammensetzung für die äußere Beschichtung ausmacht.

26. Verfahren nach Anspruch 1, wobei die diskreten nicht filmbildenden Teilchen mit einer zahlenmittleren Teilchengröße von 1 bis 500 nm wenigstens 0,1 Gew.-% der Zusammensetzung für die innere Beschichtung, der Zusammensetzung für die äußere Beschichtung oder sowohl der Zusammensetzung für die innere Beschichtung als auch der Zusammensetzung für die äußere Beschichtung ausmacht.

27. Verfahren nach Anspruch 1, wobei das Substrat, die innere Beschichtung und die äußere Beschichtung ultraviolettem Licht ausgesetzt werden, um die äußere Beschichtung mit zahlreichen Vernetzungen zu versehen, die sich von ethylenisch ungesättigten Gruppen ableiten, die in der aufgebrachten Zusammensetzung für die äußere Beschichtung vorhanden sind.

28. Gegenstand, enthaltend:
(a) ein Substrat mit wenigstens einer Oberfläche,
(b) eine innere wasserabsorbierende Beschichtung auf der Oberfläche, wobei die innere wasserabsorbierende Beschichtung ein hydrophiles organisches Polymer enthält, das im Wesentlichen frei von Vernetzungen ist, die sich von ethylenischer Ungesättigtheit ableiten, oder das wenige Vernetzungen enthält, die sich von ethylenischer Ungesättigtheit ableiten, und
(c) eine äußere wasserabsorbierende Beschichtung auf der inneren wasserabsorbierenden Beschichtung, wobei die äußere wasserabsorbierende Beschichtung ein hydrophiles organisches Polymer enthält, das zahlreiche Vernetzungen enthält, die sich von ethylenischer Ungesättigtheit ableiten,
worin:
(d) die innere Beschichtung, die äußere Beschichtung oder sowohl die innere Beschichtung als auch die äußere Beschichtung weiterhin diskrete Teilchen mit einer zahlengemittelten Teilchengröße im Bereich von 1 bis 500 nm enthält.

29. Gegenstand nach Anspruch 28, erhältlich durch ein Verfahren nach einem der Ansprüche 11-26.

30. Gegenstand nach einem der Ansprüche 28 oder 29, wobei die Dicke der inneren Beschichtung im Bereich von 1 bis 30 µm und die Dicke der äußeren Beschichtung im Bereich von 0,1 bis 10 µm liegt.

## Revendications

1. Procédé comportant :
(a) disposer d'un substrat présentant au moins une surface ;
(b) former un revêtement intérieur sur la surface en appliquant sur la surface une composition de revêtement intérieur comprenant :
(1) un premier liquide aqueux volatil ; et
(2) un polymère organique hydrophile formant un film, solubilisé par l'eau ou dispersé par l'eau, qui est substantiellement exempt de groupes insaturés à liaison éthylénique ou qui ne contient que peu de groupes insaturés à liaison éthylénique ;
(c) former un revêtement extérieur sur le revêtement intérieur en appliquant sur le revêtement intérieur une composition de revêtement extérieur comprenant :
(1) un second liquide aqueux volatil ; et
(2) un élément formant un film choisi dans le groupe constitué de :
(A) un polymère organique hydrophile, formant un film solubilisé par l'eau, qui contient de nombreux groupes insaturés à liaison éthylénique,
(B) un polymère organique hydrophile, formant un film dispersé par l'eau, qui contient de nombreux groupes insaturés à liaison éthylénique,
(C) un oligomère organique hydrophile, formant un film solubilisé par l'eau, qui contient de nombreux groupes insaturés à liaison éthylénique,
(D) un oligomère organique hydrophile, formant un film dispersé par l'eau, qui contient de nombreux groupes insaturés à liaison éthylénique,
(E) un monomère organique hydrophile, formant un film solubilisé par l'eau, qui contient de nombreux groupes insaturés à liaison éthylénique,
(F) un monomère organique hydrophile, formant un film dispersé par l'eau, qui contient de nombreux groupes insaturés à liaison éthylénique, et
(G) un mélange de deux, ou davantage, de ces éléments ; et
(d) exposer le substrat, le revêtement intérieur et le revêtement extérieur à une lumière actinique, à un rayonnement ionisant ou à la chaleur pour créer dans le revêtement extérieur de nombreuses réticulations dérivées des groupes insaturés à liaison éthylénique présents dans la composition de revêtement extérieur appliquée ;
dans lequel :
(e) la composition de revêtement intérieur, la composition de revêtement extérieur, ou chacune, de la composition de revêtement intérieur et de la composition de revêtement extérieur, contient en outre des particules discrètes qui ne forment pas de film et ont une dimension moyenne de particule en nombre valant de 1 à 500 nanomètres ;
(f) le premier liquide aqueux volatil s'élimine du revêtement intérieur pour donner sur la surface du substrat un revêtement intérieur absorbant l'eau ; et
(g) le second liquide aqueux volatil s'élimine du revêtement extérieur pour donner sur la surface du revêtement intérieur absorbant l'eau un revêtement extérieur absorbant l'eau.

2. Le procédé de la revendication 1 dans lequel la composition de revêtement intérieur contient en outre des particules discrètes qui ne forment pas de film et ont une dimension moyenne de particule en nombre valant de 1 à 500 nanomètres.

3. Le procédé de la revendication 1 dans lequel la composition de revêtement extérieur contient en outre des particules discrètes qui ne forment pas de film et ont une dimension moyenne de particule en nombre valant de 1 à 500 nanomètres.

4. Le procédé de la revendication 1 dans lequel chacune de la composition de revêtement intérieur et de la composition de revêtement extérieur contient en outre des particules discrètes qui ne forment pas de film et ont une dimension moyenne de particule en nombre valant de 1 à 500 nanomètres.

5. Le procédé de la revendication 1 dans lequel le premier liquide aqueux volatil s'élimine du revêtement intérieur avant application de la composition de revêtement extérieur sur le revêtement intérieur.

6. Le procédé de la revendication 1 dans lequel le premier liquide aqueux volatil s'élimine du revêtement intérieur après application de la composition de revêtement extérieur sur le revêtement intérieur.

7. Le procédé de la revendication 1 dans lequel le second liquide aqueux volatil s'élimine du revêtement extérieur avant d'exposer le substrat, le revêtement intérieur et le revêtement extérieur à une lumière actinique, à un rayonnement ionisant ou à la chaleur pour créer dans le revêtement extérieur de nombreuses réticulations dérivées des groupes insaturés à liaison éthylénique présents dans l'élément de la composition de revêtement extérieur appliquée qui forme un film.

8. Le procédé de la revendication 1 dans lequel le premier liquide aqueux volatil s'élimine du revêtement intérieur et le second liquide aqueux volatil s'élimine du revêtement extérieur avant d'exposer le substrat, le revêtement intérieur et le revêtement extérieur à une lumière actinique, à un rayonnement ionisant ou à la chaleur pour créer dans le revêtement extérieur de nombreuses réticulations dérivées des groupes insaturés à liaison éthylénique présents dans l'élément de la composition de revêtement extérieur appliquée qui forme un film.

9. Le procédé de la revendication 1 dans lequel le second liquide aqueux volatil s'élimine du revêtement extérieur après avoir exposé le substrat, le revêtement intérieur et le revêtement extérieur à une lumière actinique, à un rayonnement ionisant ou à la chaleur pour créer dans le revêtement extérieur de nombreuses réticulations dérivées des groupes insaturés à liaison éthylénique présents dans l'élément de la composition de revêtement extérieur appliquée qui forme un film.

10. Le procédé de la revendication 1 dans lequel le premier liquide aqueux volatil s'élimine du revêtement intérieur et le second liquide aqueux volatil s'élimine du revêtement extérieur après avoir exposé le substrat, le revêtement intérieur et le revêtement extérieur à une lumière actinique, à un rayonnement ionisant ou à la chaleur pour créer dans le revêtement extérieur de nombreuses réticulations dérivées des groupes insaturés à liaison éthylénique présents dans l'élément de la composition de revêtement extérieur appliquée qui forme un film.

11. Le procédé de la revendication 1 qui comporte en outre une impression sur le revêtement extérieur par application de gouttelettes d'encre liquide sur le revêtement extérieur.

12. Le procédé de la revendication 11 dans lequel on applique les gouttelettes d'encre liquide sur le revêtement extérieur avant que le second liquide aqueux volatil soit éliminé du revêtement extérieur.

13. Le procédé de la revendication 11 dans lequel on applique les gouttelettes d'encre liquide sur le revêtement extérieur après que le second liquide aqueux volatil ait été éliminé du revêtement extérieur.

14. Le procédé de la revendication 11 dans lequel on applique les gouttelettes d'encre liquide sur le revêtement extérieur avant que le substrat, le revêtement intérieur et le revêtement extérieur soient exposés à une lumière actinique, à un rayonnement ionisant ou à la chaleur pour créer dans le revêtement extérieur de nombreuses réticulations dérivées des groupes insaturés à liaison éthylénique présents dans la composition de revêtement extérieur appliquée.

15. Le procédé de la revendication 11 dans lequel on applique les gouttelettes d'encre liquide sur le revêtement extérieur après que le substrat, le revêtement intérieur et le revêtement extérieur aient été exposés à une lumière actinique, à un rayonnement ionisant ou à la chaleur pour créer dans le revêtement extérieur de nombreuses réticulations dérivées des groupes insaturés à liaison éthylénique présents dans la composition de revêtement extérieur appliquée.

16. Le procédé de la revendication 1 dans lequel les particules discrètes sont des particules discrètes d'alumine, de silice, ou de dioxyde de titane.

17. Le procédé de la revendication 1 dans lequel les particules discrètes sont des particules discrètes de monohydroxyde d'alumine.

18. Le procédé de la revendication 1 dans lequel les particules discrètes sont des particules discrètes de pseudoboehmite.

19. Le procédé de la revendication 1 dans lequel des particules discrètes, ne formant pas de film, constituent de 1 à 80 pour cent en poids de la composition de revêtement intérieur, de la composition de revêtement extérieur ou de chacune, de la composition de revêtement intérieur et de la composition de revêtement extérieur.

20. Le procédé de la revendication 1 dans lequel le polymère organique hydrophile, formant un film, solubilisé par l'eau ou dispersé par l'eau, de la composition de revêtement intérieur comporte de l'oxyde de (poly) éthylène, de l'alcool (poly) vinylique, de la (poly) vinylpyrrolidone, un polymère organique cellulosique soluble dans l'eau ou un mélange de deux, ou davantage, de ces corps.

21. Le procédé de la revendication 20 dans lequel le polymère organique hydrophile, formant un film, de la composition de revêtement intérieur comporte un oxyde de (poly) éthylène soluble dans l'eau d'un poids moléculaire en moyenne pondérée valant de 100.000 à 3.000.000.

22. Le procédé de la revendication 1 dans lequel le polymère organique hydrophile, formant un film, solubilisé par l'eau ou dispersé par l'eau, de la composition de revêtement extérieur comporte de l'oxyde de (poly) éthylène, de l'alcool (poly) vinylique, de la (poly) vinylpyrrolidone, un polymère organique cellulosique soluble dans l'eau ou un mélange de deux ou davantage de ces corps.

23. Le procédé de la revendication 22 dans lequel le polymère organique hydrophile, formant un film, de la composition de revêtement extérieur comporte un oxyde de (poly) éthylène soluble dans l'eau d'un poids moléculaire en moyenne pondérée valant de 100.000 à 3.000.000.

24. Le procédé de la revendication 1 dans lequel le rapport entre le nombre de groupes insaturés à liaison éthylénique par gramme du polymère organique, formant un film, présent dans la composition de revêtement intérieur et le nombre de groupes insaturés à liaison éthylénique par gramme de l'élément, formant un film, présent dans la composition de revêtement extérieur est inférieur à 0,9 :1.

25. Le procédé de la revendication 1 dans lequel le polymère organique formant un film de la composition de revêtement intérieur constitue, indépendamment, au moins 1 pour-cent en poids de la composition de revêtement intérieur et l'élément formant un film de la composition de revêtement extérieur constitue au moins 1 pour-cent en poids de la composition de revêtement extérieur.

26. Le procédé de la revendication 1 dans lequel les particules discrètes, ne formant pas un film, d'une dimension moyenne de particule en nombre valant de 1 à 500 nanomètres constituent au moins 0,1 pour-cent en poids de la composition de revêtement intérieur, de la composition de revêtement extérieur, ou de chacune, de la composition de revêtement intérieur et de la composition de revêtement extérieur.

27. Le procédé de la revendication 1 dans lequel le substrat, le revêtement intérieur et le revêtement extérieur sont exposés à une lumière ultraviolette pour créer dans le revêtement extérieur de nombreuses réticulations dérivées des groupes insaturés à liaison éthylénique présents dans la composition de revêtement extérieur appliquée.

28. Article comportant .
(a) un substrat présentant au moins une surface ;
(b) un revêtement intérieur, absorbant l'eau, sur la surface, le revêtement intérieur absorbant l'eau comprenant un polymère organique hydrophile qui est substantiellement exempt de réticulations dérivées de groupes insaturés à liaison éthylénique ou qui contient peu de réticulations dérivées de groupes insaturés à liaison éthylénique ; et
(c) un revêtement extérieur, absorbant l'eau, sur le revêtement intérieur, absorbant l'eau, le revêtement extérieur absorbant l'eau comprenant un polymère organique hydrophile qui contient de nombreuses réticulations dérivées de groupes insaturés à liaison éthylénique ;
dans lequel :
(d) le revêtement intérieur, le revêtement extérieur ou chacun, du revêtement intérieur et du revêtement extérieur, comprend en outre des particules discrètes d'une dimension moyenne de particule en nombre valant de 1 à 500 nanomètres.

29. L'article de la revendication 28 pouvant s'obtenir par un procédé conforme à l'une quelconque des revendications 11-26.

30. L'article de l'une quelconque des revendications 28 ou 29 dans lequel l'épaisseur du revêtement intérieur vaut de 1 à 30 µm et l'épaisseur du revêtement extérieur vaut de 0,1 à 10 µm.
